# EUROPEAN PATENT SPECIFICATION

(11) **EP 4 365 527 B1**
(45) Date of publication and mention of the grant of the patent: **01.04.2026**
(21) Application number: 22205112.0
(22) Date of filing: 02.11.2022
(51) Int. Cl.: F26B 3/04, F26B 15/18, F26B 23/00

(54) **HEAT RECUPERATION IN GYPSUYM BOARD DRYING PROCESS**
WÄRMERÜCKGEWINNUNG BEI DER TROCKNUNG VON GYPSUMPLATTEN
RÉCUPÉRATION DE CHALEUR DANS UN PROCÉDÉ DE SÉCHAGE DE PLANCHES DE PLÂTRE

(43) Date of publication of application: 08.05.2024
(73) Proprietor: Gyptech AB, 352 31 Växjö (SE)
(72) Inventor: JONSSON, Oskar, 352 31 Växjö (SE)
(74) Representative: Lind Edlund Kenamets Intellectual Property AB

(56) References cited:
- EP-B1- 3 717 851
- WO-A1-2014/086936
- CN-A- 101 365 655
- CN-A- 110 425 839
- FR-A1- 2 967 486
- RU-C2- 2 643 918

## Description

### TECHNICAL FIELD OF THE INVENTION

The present invention relates to drying of wet gypsum board, and specifically to recovering/recuperation of heat from the exhaust steam to thereby reduce energy consumption.

### BACKGROUND OF THE INVENTION

When manufacturing gypsum boards, a wet plaster slurry is disposed between two paper webs. The webs are conveyed along a drying section, where heat is applied to dry the slurry. The drying process requires large amounts of energy, as significant amounts of water need to be removed from the slurry. The process also requires considerable time, in the order of 30 minutes, as the paper web restricts the amount of water that can be evaporated per time unit. Consequently, the drying section is typically quite long, e.g. tens of meters, possibly more than 100 m.

In conventional gypsum board dryers, hot air is made to flow in parallel with the conveyor (in or against the direction of travel). The process may also include sections where hot air is introduced vertically towards the wet gypsum boards (cross-flow). Gas burners are used to provide the high temperatures required for the drying process. Several burners may be arranged along the conveyor to create a flow of hot air in different directions. In sections where the temperature can be slightly lower, burners may not be required. The compete drying process should provide a desired heat profile; for example, the temperature may first be ramped up to a maximum, and then allowed to gradually decrease.

In order to reduce energy consumption, various forms of energy recuperation have been proposed. For example, WO 2019/105888 discloses a process where a closed-circuit carrying liquid heat medium is connected to a pair of heat exchangers receiving heat from exhaust air. Additional heat exchangers then transfer the heat in the liquid medium to hot air in the drying process. Document WO2014/086936 proposes heat exchangers connected to the exhaust outlet, and a heat pump connected to one of the heat exchangers. Heat from the heat pump is provided to sections of the drying process without burners.

Despite these efforts, the drying of gypsum boards still requires large amounts of energy, and in particular natural gas or similar fuel for the burners.

### SUMMARY OF THE INVENTION

It is an object of the present invention to provide a system and method for improved energy recuperation in a gypsum board drying process, without significantly extending the time required for the drying process.

According to an aspect of the invention, this and other objects are achieved by a system for drying wet gypsum board, comprising a conveyor path for advancing wet gypsum board in a feeding direction, means for exposing the wet gypsum board to a flow of hot air, and an outlet arranged to remove a flow of exhaust steam dissipated from the wet gypsum board. The system further comprises an exhaust heat exchanger for transferring heat from the exhaust steam to a primary closed circuit circulating a first heat carrying medium, at least one high-temperature heat pump having a primary, low temperature side connected to the primary closed circuit, and a secondary, high-temperature side, connected to a secondary closed circuit circulating a second heat carrying medium, the high-temperature heat pump being configured to provide a temperature on the secondary side of at least 160 degrees C; and a preheating heat exchanger connected to transfer heat from the secondary closed circuit to the flow of hot air.

Such a process achieves considerable recuperation of energy by employing a heat pump capable of providing relatively high temperature, above 160 degrees C. Such high temperature heat pumps have not been conceivable in the past, and heat pumps have therefore not been considered in the context proposed by the present inventors. It is only now, with more powerful heat pumps being available, that the present inventors have realized that such heat pumps may achieve surprisingly large energy recuperation in a gypsum board drying process.

In fact, by using high temperature heat pumps as proposed by the present invention, it is possible to design a gypsum board drying process entirely without gas burners, thereby completely avoiding the need for natural gas or other burner fuels.

The first heat carrying medium may be water in gas state (steam) or liquid state. Water is a cost-efficient heat carrying medium with relatively high specific heat capacity. The second heat carrying medium, which requires an even higher specific heat capacity, may be a liquid, such as water or propylene glycol.

According to the present invention the means for exposing the wet gypsum board to hot air includes a series of sequential drying zones along the conveyor, each drying zone having a separate generation of hot air, in which case the temperature on the secondary side of the heat-pump is sufficiently high to contribute to the hot air generation in all drying zones. This is a significant difference compared to existing solutions, where a heat pump is arranged to contribute only in some - lower temperature - zones.

In some embodiments, the means for exposing the wet gypsum board to hot air includes a burner configured to heat incoming air and output hot air, and a fan to move hot air from the burner in a path along the wet gypsum board and back to the burner as incoming air, wherein the preheating heat exchanger is connected to transfer heat from the secondary closed circuit to the incoming air before the incoming air is heated by the burner. This application of a heat pump has never been contemplated to the knowledge of the inventors. It is only with the employment of high temperature heat pumps that such an application is feasible.

### BRIEF DESCRIPTION OF THE DRAWINGS

The present invention will be described in more detail with reference to the appended drawings, showing currently preferred embodiments of the invention.
Figure 1 shows schematically a gypsum board drying process according to a first embodiment of the present invention.
Figure 2 shows a temperature diagram associated with the process in figure 1.
Figure 3 shows schematically a gypsum board drying process according to a second embodiment of the present invention.
Figure 4 shows a temperature diagram associated with the process in figure 3.

### DETAILED DESCRIPTION OF CURRENTLY PREFERRED EMBODIMENTS

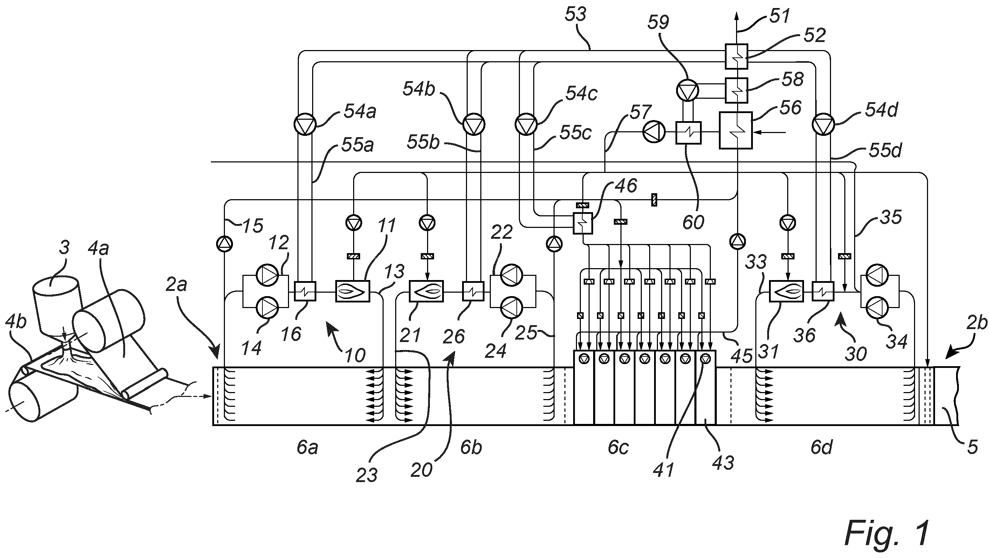

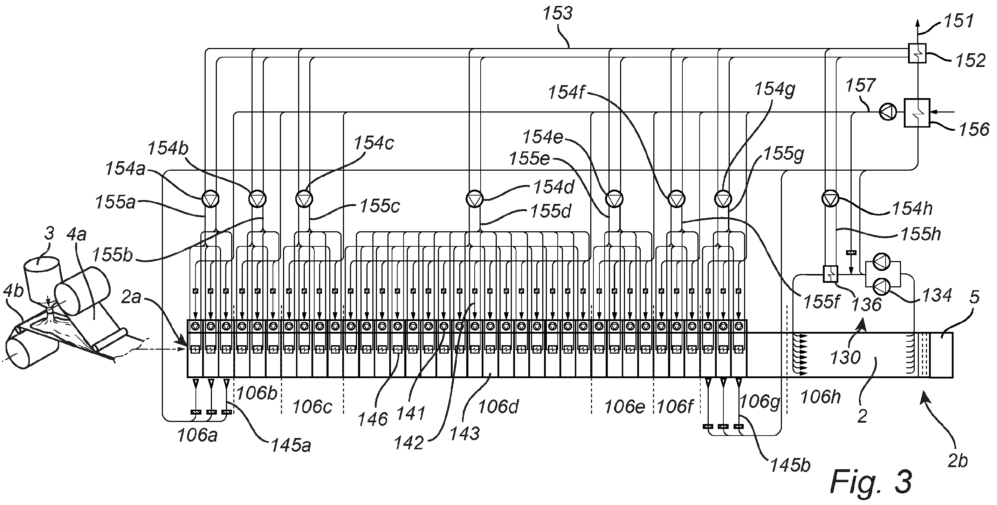

It is noted that in the following description, some standard components illustrated in figures 1 and 3, such as fans and valves, have not been mentioned or described in detail.

The gypsum board drying process 1 in figure 1 generally includes a conveyor path 2 arranged to convey wet gypsum board in a feeding direction from a first end 2a to a second end 2b. The wet gypsum board is formed in the first end, where a plaster slurry 3 is introduced between two paper webs 4a, 4b. At the second end 2b, dried gypsum board 5 is outputted from the process.

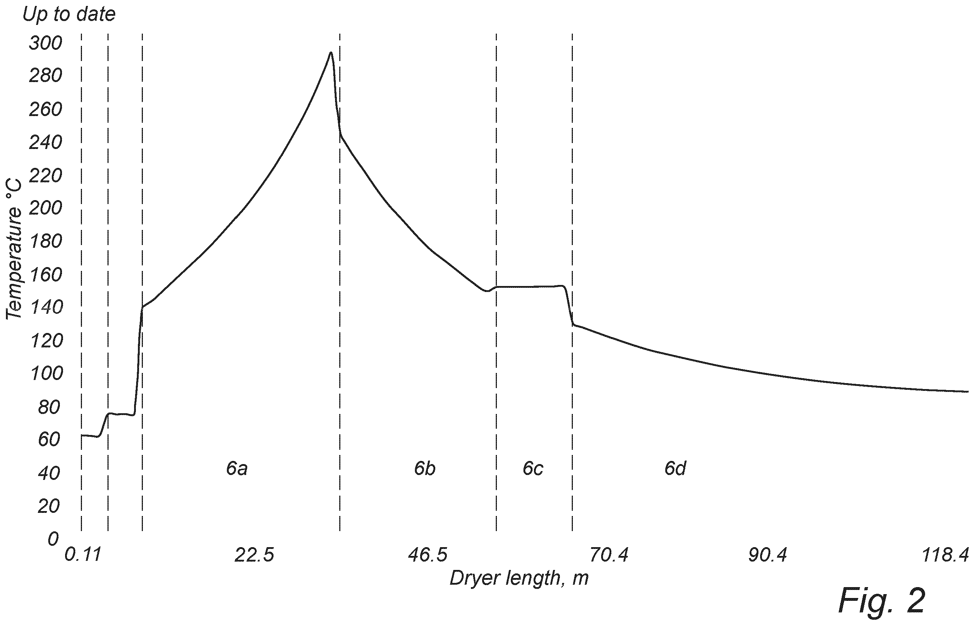

The conveyor path can be divided into a plurality of separate zones 6a-d, together creating a temperature profile, i.e. temperature as a function of position along the path. Figure 2 shows an example of such a temperature profile associated with the process in figure 1.

In the illustrated example, the first zone 6a of the process 1 includes a first drying arrangement 10 having a burner 11 configured to receive incoming air 12 taken from the beginning of the zone, and output heated air 13 air, a fan 14 to move hot air 13 from the burner 11 along the conveyor 2 (opposite the feeding direction) and back to the burner 11 as incoming air 12, and an outlet 15 allowing exhaust steam from the drying arrangement 10 to be removed. As is evident from figure 1, the fan 14 in zone 6a is arranged to generate a flow opposite the direction of the path 2. This means that the temperature will be highest in the down-stream end of the zone 6a (closer to the burner 11). This is also reflected in figure 2.

The second zone 6b in figure 1 includes a second drying arrangement 20 having a burner 21 configured to heat incoming air 22 and output hot air 23, a fan 24 to move hot air 23 from the burner 21 in a path along the path 2 and back to the burner 21 as incoming air 22, and an outlet 25 allowing exhaust steam from the drying arrangement 20 to be removed. The fan 24 in zone 6b is arranged to generate a flow in the direction of the path 2. This means that the temperature will decrease along the path 2, as shown in figure 2.

The fourth and final zone 6d is similar to zone 6b, with a drying arrangement 30 including a burner 31 and fan 34 arranged in the same way is in zone 6b, to create a flow of hot air 33 along the conveyor path in the feeding direction. As seen in figure 2, the heating arrangement 30 provides a decreasing temperature profile (as shown in figure 2). The arrangement in zone 6d also includes an outlet 35 allowing exhaust steam from the drying arrangement 30 to be removed.

The third zone 6c is different from zones 6a, 6b and 6d, as it does not provide an airflow horizontally along the path 2, but vertically towards the path 2. Such a zone is sometimes referred to as a "cross-flow" zone. In zone 6c, a set of fans 41 are arranged to each create a flow of hot air 42 through a duct 43 extending across the path 2. The duct 43 is designed to direct the flow of air 42 downwards, towards the wet gypsum board on the conveyor. An outlet 45 is arranged to remove exhaust steam. In figure 2, zone 6c is shown as a constant, or almost constant temperature.

The various flows of exhaust steam 15, 25, 35, 45 are connected to one common exhaust outlet 51. This is preceded by an exhaust heat exchanger 52, arranged to transfer heat from the exhaust steam to a primary closed circuit 53 containing a first heat carrying medium. As an example, the temperature of the steam in the exhaust outlet 51 may be in the order of 70°C. The heat exchanger 52 may be configured to increase the temperature in the primary closed circuit 53 by around 20°C, e.g. from around 25°C to 45°C . The first heat carrying medium may be steam, but may alternatively be liquid water or any other appropriate heat carrying medium with sufficient specific heat capacity.

The closed circuit 53 is connected to one or more, here four, high temperature heat pumps 54a, 54b, 54c, 54d. Each heat pump has a low temperature primary side connected to the first circuit 53, and a high temperature secondary side is connected to a respective secondary closed circuit 55a, 55b, 55c, 55d containing a second heat carrying medium. The second heat carrying medium is preferably liquid water or another liquid heat carrying medium.

A high temperature heat pump is here defined as a heat pump capable of providing a temperature greater than 160 °C on the secondary side. Such a high temperature heat pump may for example be realized using a Stirling engine using helium as working medium. Heta pumps of this kind are expected to be commercially available from Enerin AS in Norway.

The closed circuits 55a, 55b and 55d are connected to heat exchangers 16, 26, 36, respectively, and these heat exchangers 16, 26, 36 are arranged immediately preceding the burners 11, 21 and 31, respectively. As an example, the temperature in the secondary closed circuits 55a and 55b may be in the order of 200°C, while the temperature in the secondary closed circuit 55d may be slightly lower, e.g. in the order of 170°C. The heat exchangers 16, 26, 36 are connected to deliver heat from the respective secondary closed circuits 55a, 55b and 55d to preheat the incoming air of each burner 11, 21, 31. This preheating serves to significantly reduce the fuel consumption of the burners.

A second exhaust heat exchanger 56 is also connected to the outlet 51, and configured to transfer heat from the exhaust steam to a flow of heated air 57. This heated air 57 is used as air supply to the burners 11, 21, 31.

The heated air 57 is also used as incoming air to a fourth heat exchanger 46, which is connected to the closed circuit 55c. The heat exchanger 46 is arranged to deliver heat from the closed circuit 55c to preheat the heated air 57 to form the hot air flow 42 to be directed towards the wet gypsum board by ducts 43.

In order to increase the temperature in the heated air 57 further, yet another heat exchanger 58 may be connected to the outlet 51, and arranged to transfer heat to another heat pump 59. The secondary side of the heat pump is connected to a further heat exchanger 60, arranged to deliver heat from the secondary side to the heated air 57. With this design, the temperature of the heated air can be around 140°C.

The temperatures in the various zones will now be discussed with reference to the specific example given in figure 2.

In zone 6a, the temperature of the incoming air 12 is in the order of 140 °C, which is increased by around 20°C by the heat exchanger 16. The burner 11 generates hot air with a temperature around 300°C. This air is fed back along the conveyor to dry the wet gypsum board, whereby its temperature drops back to around 140 °C.

In zone 6b, the temperature of the incoming air 22 is again in the order of 140°C, which is increased by around 20°C by the heat exchanger 26. The burner 21 generates hot air with a temperature around 280°C. This hot air is fed along the conveyor in the feeding direction, whereby its temperature drops back to around 140°C.

In zone 6c, the heated air 57, from the second exhaust heat exchanger 56, which here has a temperature of around 140°C, is heated by the heat exchanger 46 to a temperature of around 150°C,

In zone 6d, finally, the temperature of the incoming air 32 is in the order of 90°C, which is increased by around 20°C by the heat exchanger 36. The burner 31 generates hot air with a temperature around 130°C. This hot air is fed along the conveyor in the feeding direction, whereby its temperature drops back to around 90°C.

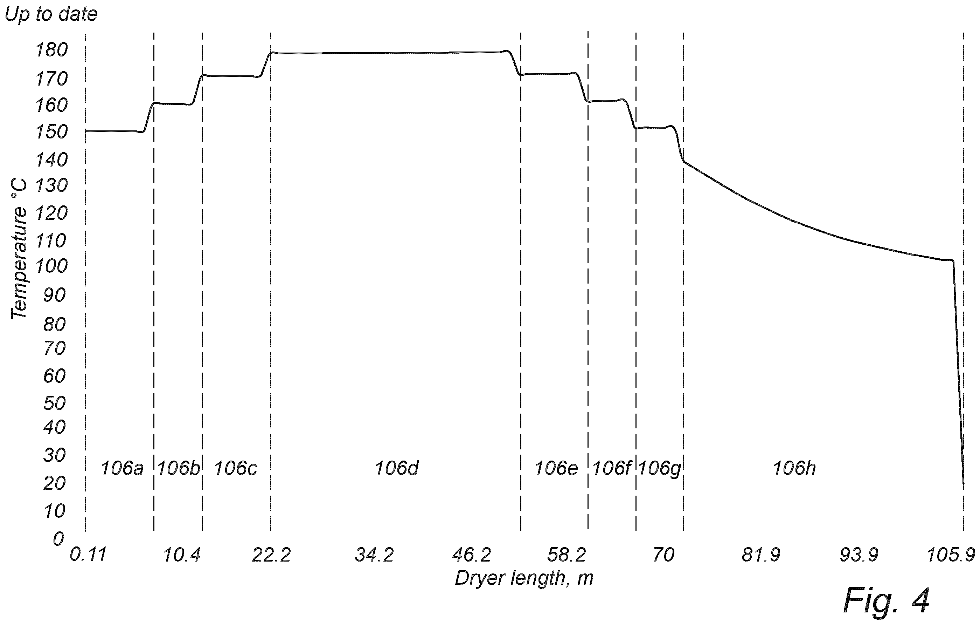

With reference to figures 3 and 4, another drying process includes eight consecutive zones 106a-h.

The first seven zones 106a-g are all cross-flow zones, similar to zone 6c in figure 1. Each such zone includes a set of fans 141 to each provide a flow of hot air 142 into a duct 143 extending across the conveyor 2, and designed to direct the flow of air 143 down towards the wet gypsum board. In the illustrated example, only zones 106a and 106g are provided with outlets 145a, 145b for exhaust steam. These outlets 145a, 145b are connected to a general exhaust outlet 151.

Just as in figure 1, the system in figure 3 has an exhaust heat exchanger 152 arranged on the outlet 151, configured to transfer heat form the exhaust steam to a closed circuit 153. The closed circuit 153 is connected to the low temperature side of a set of high temperature heat pumps 154a-154h, one for each zone. The high temperature side of each heat pump is connected to a secondary closed circuit 155a-155h.

In the first seven zones 106a-106g, the respective secondary closed circuit is forked into a set of circuits, each connected to a heat exchanger 146. In the illustrated example, zones 106, 106b, 106f and 106g all have three heat exchangers, zones 106c and 106e have four heat exchangers, while the central zone 106d has no less than sixteen heat exchangers. Different numbers of ducts 143 and associated components may be used, and the design in figure 3 is to be seen as only one example. Also, there may be more than one heat exchanger in a single duct, and more than one duct connected to a single heat exchanger.

A second exhaust heat exchanger 156 is also connected to the outlet 151, and configured to transfer heat from the exhaust steam to a flow of heated air 157. This heated air 157 is used as air supply to the ducts 143.

The last zone 106h creates a flow along the conveyor path 2 in the feeding direction, similar to zone 6d in figure 1. As such, zone 106h features a heating arrangement 130, including a heat exchanger 136 to generate heated air 133 by transferring heat from the secondary closed circuit 155h connected to the heat pump 154h. A fan 134 is arranged to circulate the heated air 133 along the conveyor path, and back to the heat exchanger 136. The flow of heated air 157 is also connected to this flow.

As only the peripheral cross-flow zones 106a and 106h are provided with exhaust outlets 145a, 145b, heat in the central zones 106b-106g will spread outwards to more peripheral zones. As a result, the temperature becomes higher in the central zones and lower in the peripheral zones.

The resulting temperature profile is shown in figure 4. As shown by the diagram, each cross-flow zone 106a-106h provides a relatively stable temperature, first stepwise increasing, to reach a maximum in zone 106d, and then stepwise decreasing. The last zone 106h provides a further gradual temperature decrease, similar to the effect of zone 6d in figure 1.

The person skilled in the art realizes that the present invention by no means is limited to the preferred embodiments described above. On the contrary, many modifications and variations are possible within the scope of the appended claims. For example, one or several of the burners in figure 1 may be eliminated, thanks to the high temperatures provided by the heat pumps 54a-d. In particular, the burner 31 in zone 6d may be eliminated, and heat exchanger 36 be sufficient for heating the air 33. Also, the system in figure 3 may be provided with additional components corresponding to the heat pump 59 and heat exchangers 58 and 60 in figure 1, in order to increase the temperature of the air 157 even further.

## Claims

1. A system for drying wet gypsum board, comprising:
a conveyor path (2) for advancing wet gypsum board in a feeding direction;
means for exposing the wet gypsum board to a flow of hot air, wherein the means for exposing the wet gypsum board to a flow of hot air includes a series of sequential drying zones (6a-d; 106a-h) along the conveyor path (2), each drying zone having a separate generation of hot air;
an outlet (51; 151) arranged to remove a flow of exhaust steam dissipated from the wet gypsum board;
an exhaust heat exchanger (52; 152) for transferring heat from the exhaust steam to a primary closed circuit (53; 153) circulating a first heat carrying medium; and
a preheating heat exchanger (16, 26, 36, 46; 136, 146) connected to transfer heat from said secondary closed circuit to the flow of hot air,
**characterized in that** the system is further comprising at least one heat pump (54a-d; 154a-h) having a primary, low temperature side connected to said primary closed circuit, and a secondary, high-temperature side, connected to a secondary closed circuit (55a-d; 155a-h) circulating a second heat carrying medium; and **in that**
said heat pump is a high-temperature heat pump (54a-d; 154a-h) being configured to provide a temperature on the secondary side of at least 160 degrees C, so that the temperature on the secondary side of the heat-pump is sufficiently high to contribute to the generation of hot air in all drying zones.

2. The system according to claim 1, wherein said high-temperature heat pump is configured to provide a temperature on the secondary side of at least 180 degrees C, and preferably at least 200 degrees C.

3. The system according to claim 1 or 2, wherein said high-temperature heat pump includes a Stirling engine.

4. The system according to claim 1 or 2, wherein said high-temperature heat pump uses helium as working medium.

5. The system according to one of the preceding claims, wherein the first heat carrying medium is water in gas or liquid state.

6. The system according to one of the preceding claims, wherein the second heat carrying medium is a liquid, such as water.

7. The system according to one of the preceding claims, wherein said means for exposing the wet gypsum board to hot air includes:
a burner (11, 21, 31) configured to heat incoming air and output hot air, and a fan to move hot air from the burner in a path along the wet gypsum board and back to the burner as incoming air, and
wherein the preheating heat exchanger (16, 26, 36) is connected to transfer heat from said secondary closed circuit to the incoming air (12, 22, 32) before the incoming air is heated by the burner.

8. The system according to one of the preceding claims, wherein said means for exposing the wet gypsum board to hot air includes:
a heat exchanger (46; 146) connected to one of said heat pumps (54c; 154a-g)
a set of ducts (43; 143) arranged along the conveyor path (2), so that each duct (43) extends across the conveyor path (2);
at least one fan (41; 141) arranged to create a flow of hot air (42; 142) from the heat exchanger (46; 146) through said ducts (43; 143), wherein each duct (43; 143) is designed to direct the hot air (42; 142) downwards, towards the wet gypsum board on the conveyor (2); and
an outlet (45; 145a, 145b) arranged to remove exhaust steam.

9. The system according to claim 8, comprising a first and a second outlet (145a, 145b), the first outlet (145a) being arranged to remove exhaust steam from a first portion (106a) of the drying process, and the second outlet (145b) being arranged to remove exhaust steam from a final portion (106g) of the drying process, and wherein exhaust steam from intermediate portions (106b - 106 f) is allowed to spread towards said first portion and said final portion.

## Patentansprüche

1. System zum Trocknen von feuchten Gipsplatten, umfassend:
eine Förderbahn (2) zum Transportieren von feuchten Gipsplatten in einer Zuführrichtung;
Mittel zum Aussetzen der feuchten Gipsplatte einem Strom aus Heißluft, wobei die Mittel zum Aussetzen der feuchten Gipsplatte einem Strom aus Heißluft eine Reihe aufeinanderfolgender Trocknungszonen (6a-d; 106a-h) entlang der Förderbahn (2) umfassen, wobei jede Trocknungszone eine separate Erzeugung von Heißluft aufweist;
einen Auslass (51; 151), der angeordnet ist, um einen Strom aus Abdampf zu entfernen, der aus der feuchten Gipsplatte abgegeben wird;
einen Abgaswärmetauscher (52; 152) zum Übertragen von Wärme aus dem Abdampf an einen primären geschlossenen Kreislauf (53; 153), in dem ein erstes Wärmeträgermedium zirkuliert; und
einen Vorwärmwärmetauscher (16, 26, 36, 46; 136, 146), der verbunden ist, um Wärme von dem sekundären geschlossenen Kreislauf auf den Strom aus Heißluft zu übertragen,
**dadurch gekennzeichnet, dass** das System ferner mindestens eine Wärmepumpe (54a-d; 154a-h) umfasst, die eine primäre Niedertemperaturseite, die mit dem primären geschlossenen Kreislauf verbunden ist, und eine sekundäre Hochtemperaturseite aufweist, die mit einem sekundären geschlossenen Kreislauf (55a-d; 155a-h) verbunden ist, in dem ein zweites Wärmeträgermedium zirkuliert; und darin, dass
die Wärmepumpe eine Hochtemperatur-Wärmepumpe (54a-d; 154a-h) ist, die ausgelegt ist, um auf der Sekundärseite eine Temperatur von mindestens 160 °C bereitzustellen, sodass die Temperatur auf der Sekundärseite der Wärmepumpe hoch genug ist, um zur Erzeugung von Heißluft in allen Trocknungszonen beizutragen.

2. System nach Anspruch 1, wobei die Hochtemperatur-Wärmepumpe ausgelegt ist, um auf der Sekundärseite eine Temperatur von mindestens 180 °C und vorzugsweise mindestens 200 °C bereitzustellen.

3. System nach Anspruch 1 oder 2, wobei die Hochtemperatur-Wärmepumpe einen Stirlingmotor aufweist.

4. System nach Anspruch 1 oder 2, wobei die Hochtemperatur-Wärmepumpe Helium als Arbeitsmedium verwendet.

5. System nach einem der vorhergehenden Ansprüche, wobei das erste Wärmeträgermedium Wasser in gasförmigem oder flüssigem Zustand ist.

6. System nach einem der vorhergehenden Ansprüche, wobei das zweite Wärmeträgermedium eine Flüssigkeit, wie etwa Wasser, ist.

7. System nach einem der vorhergehenden Ansprüche, wobei die Mittel zum Aussetzen der feuchten Gipsplatte gegenüber Heißluft aufweisen:
einen Brenner (11, 21, 31), der ausgelegt ist, um einströmende Luft zu erwärmen und Heißluft auszugeben, und einen Ventilator, um Heißluft von dem Brenner in einer Bahn entlang der feuchten Gipsplatte und zurück zu dem Brenner als einströmende Luft zu bewegen, und
wobei der Vorwärmwärmetauscher (16, 26, 36) verbunden ist, um Wärme aus dem sekundären geschlossenen Kreislauf an die einströmende Luft (12, 22, 32) zu übertragen, bevor die einströmende Luft durch den Brenner erwärmt wird.

8. System nach einem der vorhergehenden Ansprüche, wobei die Mittel zum Aussetzen der feuchten Gipsplatte gegenüber Heißluft aufweisen:
einen Wärmetauscher (46; 146), der mit einer der Wärmepumpen (54c; 154a-g) verbunden ist;
einen Satz von Leitungen (43; 143), die entlang der Förderbahn (2) angeordnet sind, sodass sich jede Leitung (43) über die Förderbahn (2) erstreckt;
mindestens einen Ventilator (41; 141), der angeordnet ist, um einen Strom aus Heißluft (42; 142) aus dem Wärmetauscher (46; 146) durch die Leitungen (43; 143) zu erzeugen, wobei jede Leitung (43; 143) so ausgebildet ist, dass sie die Heißluft (42; 142) nach unten in Richtung der feuchten Gipsplatte auf dem Förderer (2) leitet; und
einen Auslass (45; 145a, 145b), der angeordnet ist, um Abdampf zu entfernen.

9. System nach Anspruch 8, umfassend einen ersten und einen zweiten Auslass (145a, 145b), wobei der erste Auslass (145a) angeordnet ist, um Abdampf aus einem ersten Abschnitt (106a) des Trocknungsvorgangs zu entfernen, und der zweite Auslass (145b) angeordnet ist, um Abdampf aus einem letzten Abschnitt (106g) des Trocknungsvorgangs zu entfernen, und wobei Abdampf aus den Zwischenabschnitten (106b - 106f) in Richtung des ersten Abschnitts und des letzten Abschnitts ausbreiten kann.

## Revendications

1. Système de séchage de planches de plâtre humides, comprenant :
un voie de transport (2) destinée à faire avancer des planches de plâtre humides dans une direction d'alimentation ;
un moyen d'exposition des planches de plâtre humides à un flux d'air chaud, dans lequel le moyen d'exposition des planches de plâtre humides à un flux d'air chaud inclut une série de zones de séchage (6a-d ; 106a-h) successives le long de la voie de transport (2), chaque zone de séchage comportant une génération d'air chaud séparée ;
une sortie (51 ; 151) conçue pour évacuer un flux de vapeur d'échappement dissipée à partir des planches de plâtre humides ;
un échangeur de chaleur d'échappement (52 ; 152) destiné à transférer de la chaleur à partir de la vapeur d'échappement vers un circuit fermé primaire (53 ; 153) faisant circuler un premier fluide caloporteur ; et
un échangeur de chaleur de préchauffage (16, 26, 36, 46 ; 136, 146) raccordé pour transférer de la chaleur à partir dudit circuit fermé secondaire vers le flux d'air chaud,
**caractérisé en ce que** le système comprend en outre au moins une pompe à chaleur (54a-d ; 154a-h) comportant un côté basse température primaire raccordé audit circuit fermé primaire, et un côté haute température secondaire raccordé à un circuit fermé secondaire (55ad ; 155a-h) faisant circuler un deuxième fluide caloporteur ; et **en ce que**
ladite pompe à chaleur est une pompe à chaleur haute température (54a-d ; 154a-h) configurée pour fournir une température d'au moins 160 degrés C sur le côté secondaire, de sorte que la température sur le côté secondaire de la pompe à chaleur est suffisamment élevée pour contribuer à la génération d'air chaud dans toutes les zones de séchage.

2. Système selon la revendication 1, dans lequel ladite pompe à chaleur haute température est configurée pour fournir une température d'au moins 180 degrés C et de préférence d'au moins 200 degrés C sur le côté secondaire.

3. Système selon la revendication 1 ou 2, dans lequel ladite pompe à chaleur haute température inclut un moteur Stirling.

4. Système selon la revendication 1 ou 2, dans lequel ladite pompe à chaleur haute température utilise de l'hélium comme fluide de travail.

5. Système selon l'une des revendications précédentes, dans lequel le premier fluide caloporteur est de l'eau à l'état gazeux ou liquide.

6. Système selon l'une des revendications précédentes, dans lequel le deuxième fluide caloporteur est un liquide, tel que l'eau.

7. Système selon l'une des revendications précédentes, dans lequel ledit moyen d'exposition des planches de plâtre humides à l'air chaud inclut :
un brûleur (11, 21, 31) configuré pour chauffer de l'air entrant et de l'air chaud sortant, et un ventilateur destiné à déplacer de l'air chaud à partir du brûleur sur un trajet le long des planches de plâtre humides et à le renvoyer vers le brûleur en tant qu'air entrant, et
dans lequel l'échangeur de chaleur de préchauffage (16, 26, 36) est raccordé pour transférer de la chaleur à partir dudit circuit fermé secondaire vers l'air entrant (12, 22, 32) avant que l'air entrant soit chauffé par le brûleur.

8. Système selon l'une des revendications précédentes, dans lequel ledit moyen d'exposition des planches de plâtre humides à l'air chaud inclut :
un échangeur de chaleur (46 ; 146) raccordé à l'une desdites pompes à chaleur (54c ; 154a-g) ;
un ensemble de conduits (43 ; 143) disposés le long de la voie de transport (2), de telle façon que chaque conduit (43) s'étend à travers la voie de transport (2) ;
au moins un ventilateur (41 ; 141) conçu pour créer un flux d'air chaud (42 ; 142) à partir de l'échangeur de chaleur (46 ; 146) à travers lesdits conduits (43 ; 143), dans lequel chaque conduit (43 ; 143) est conçu pour diriger l'air chaud (42 ; 142) vers le bas, vers les planches de plâtre humides sur le convoyeur (2) ; et
une sortie (45 ; 145a, 145b) conçue pour évacuer de la vapeur d'échappement.

9. Système selon la revendication 8, comprenant une première et une deuxième sortie (145a, 145b), la première sortie (145a) étant conçue pour évacuer de la vapeur d'échappement à partir d'une première partie (106a) du processus de séchage, et la deuxième sortie (145b) étant conçue pour évacuer de la vapeur d'échappement à partir d'une partie finale (106g) du processus de séchage, et dans lequel de la vapeur d'échappement provenant de parties intermédiaires (106b - 106f) peut se diffuser vers ladite première partie et ladite partie finale.
